Europäisches Patentamt

European Patent Office

Office européen des brevets

(11) Veröffentlichungsnummer : **0 175 943**
B1

(12) EUROPÄISCHE PATENTSCHRIFT

(45) Veröffentlichungstag der Patentschrift :
09.11.88

(51) Int. Cl.⁴ : **F 16 L 59/02**, F 16 L 59/10

(21) Anmeldenummer : 85110696.3

(22) Anmeldetag : 26.08.85

(54) **Rohrförmige Isolierschale zur thermischen Isolation an Rohrleitungen von Wärme- oder Kälteanlagen.**

(30) Priorität : 27.08.84 DE 3431477
20.09.84 DE 3434603

(43) Veröffentlichungstag der Anmeldung :
02.04.86 Patentblatt 86/14

(45) Bekanntmachung des Hinweises auf die Patenterteilung : 09.11.88 Patentblatt 88/45

(84) Benannte Vertragsstaaten :
AT BE CH FR GB IT LI LU NL SE

(56) Entgegenhaltungen :
DE-A- 2 102 420
DE-U- 7 509 227
FR-A- 2 200 471
US-A- 4 022 248
US-A- 4 218 814

(73) Patentinhaber : Fischer, Kurt
Friedenstrasse 11
D-7615 Zell a.H. (DE)

(72) Erfinder : Fischer, Kurt
Friedenstrasse 11
D-7615 Zell a.H. (DE)

(74) Vertreter : Dorner, Jörg, Dr.-Ing. et al
Dorner & Hufnagel Patentanwälte Ortnitstrasse 20
D-8000 München 81 (DE)

## Beschreibung

Die Erfindung betrifft eine rohrförmige Isolierschale zur thermischen Isolation an Rohrleitungen von Wärme- oder Kälteanlagen, mit einer aus Schaumstoff gefertigten, im Querschnitt im wesentlichen ringförmigen Isolierwand, welche von einer längslaufenden, sich im wesentlichen von der Außenseite zum Innenraum der Isolierschale erstreckenden Fuge durchsetzt ist, sowie mit Mitteln zum Zusammenhalten der einander gegenüberliegenden Isolierwandränder längs der genannten Fuge in Gestalt von an den einander gegenüberliegenden Isolierwandränder jeweils befestigten, miteinander verbindbaren Befestigungsleisten. Solch eine Isolierschale ist aus DE-U-7 509 227 bekannt. Allgemein bekannt sind rohrförmige oder schlauchförmige Isolierschalen, deren Isolierwand aus einem dem Umfang des zu isolierenden Rohres angepaßten Streifen aus wärmebeständigem oder kältebeständigem Schaumstoff gebildet ist, wobei nach Herumlegen um das zu isolierende Rohr die Isolierwandränder einander längs einer Radialfuge gegenüberstehen und durch einen das radial äußere Ende der Fuge überdeckenden Klebestreifen zusammengehalten werden. Anstelle eines einstückigen Klebestreifens kann auch ein aus zwei miteinander verrastbaren Streifen gebildeter Gleitverschluß die Haltemittel zum Zusammenhalten der Isolierwandränder bilden. Weiter ist es möglich, die Isolierwandränder längs der sie nach dem Herumlegen des Streifenmaterials um das zu isolierende Rohr trennenden Fuge miteinander zu verkleben.

Weiter ist es bekannt, rohrförmige Isolierschalen mit einer bereits rohrförmig ausgebildeten Isolierwand bereitzustellen und diese Isolierwand zum Anbringen der Isolierschale an das zu isolierende Rohr längs eines axial verlaufenden, sich radial von der Außenseite zum Innenraum der Isolierschale erstreckenden Schnittes aufzutrennen und nach dem Anlegen der Isolierschale den Schnitt zu verkleben oder außenseitig mittels Klebstreifen zu verschließen.

Die rohrförmige Isolierschale kann bei bekannten Konstruktionen mit einer äußeren Schutzschicht, etwa in Gestalt einer folienartigen Kunststoffschicht ausreichender Härte und Formbeständigkeit, versehen sein, welche das Eindringen von Feuchtigkeit und die Einwirkung zerstörender mechanischer Kräfte auf den Schaumstoff verhindert.

Bei den bekannten Konstruktionen rohrförmiger Isolierschalen bereitet es mitunter Schwierigkeiten, nach dem Herumlegen der Isolierschale um das zu isolierende Rohr die Mittel zum Zusammenhalten der Isolierwandränder präzise anzubringen, soweit diese Mittel nicht von einem einstückigen Klebstreifen oder durch eine Verklebung der Isolierwandränder unmittelbar aneinander gebildet sind.

Insbesondere dann, wenn die Mittel zum Zusammenhalten der Isolierwandränder von zwei ineinander verrastbaren oder in anderer Weise miteinander verbindbaren Streifen oder Leisten gebildet sind, müssen diese Leisten an den Isolierwandränder so angebracht werden, daß einerseits nach Herumlegen der Isolierwand um das zu isolierende Rohr die Isolierwandränder aneinander anstehen, andererseits aber ein Ineinandergreifen der Befestigungsmittel der genannten Leisten gewährleistet ist. Bei der Herstellung solcher rohrförmiger Isolierschalen sind also die Isolierwand und die zwei leistenförmigen Teile der Mittel zum Zusammenhalten der Isolierwandränder als gesonderte Bauteile zu handhaben und so miteinander zu verbinden, daß die gewünschte Funktionstüchtigkeit der eingebauten Rohrisolation gewährleistet ist.

Durch die Erfindung soll die Aufgabe gelöst werden, die Anzahl der bei der Herstellung von rohrförmigen Isolierschalen zu handhabenden Teile zu vermindern und bestimmte Fertigungsschritte bei der Herstellung zu vereinfachen, gleichzeitig aber die Montage der rohrförmigen Isolierschalen gerade in solchen Fällen zu erleichtern, in welchen die Mittel zum Zusammenhalten der Isolierwandränder die Gestalt von an den einander gegenüberliegenden Isolierwandränder jeweils befestigten, miteinander verbindbaren Befestigungsleisten haben.

Diese Aufgabe wird erfindungsgemäß dadurch gelöst, daß diese Befestigungsleisten einstückig über mindestens eine längslaufende Solltrennstelle verbunden im wesentlichen nebeneinanderliegend und die Fuge zwischen den Isolierwandränder überspannend an den Isolierwandränder so befestigt sind, daß die Solltrennstelle im Bereich der radial äußeren Fugenöffnung gelegen ist und daß die Fuge solche Breite in Umfangsrichtung hat, daß nach Durchtrennen der mindestens einen Solltrennstelle unter Schließen der Fuge ein freies Ende einer Befestigungsleiste die jeweils andere Befestigungsleiste mindestens teilweise überlappend in Befestigungseingriff mit der anderen Befestigungsleiste bringbar ist.

Man erkennt, daß die beiden Befestigungsleisten bei der Herstellung der Mittel zum Zusammenhalten der Isolierwandränder als einstückiges Band beispielsweise im Strangpreßverfahren aus thermoplastischem Kunststoff hergestellt werden können und dieses einstückige Band auf die im Querschnitt etwa ringförmige Isolierwand längslaufend in einem Zustand dieser Isolierwand aufgeklebt, aufgeschweißt oder in anderer Weise aufgebracht wird, in welchem die Fuge durch eine Vorrichtung, etwa durch einen Dorn, so erweitert ist, daß nach Auftrennen des einstückigen Kunststoffbandes in die beiden Befestigungsleisten längs der Solltrennstelle die vorerwähnte Überlappungsstellung präzise erreicht wird, wenn die Fuge vollständig geschlossen wird und die Isolierwandränder aneinander anliegen.

Die einander zugekehrten Seiten der Befestigungsleisten können im Überlappungsbereich einseitig bzw. beidseitig mit Klettbelägen, Klebebelägen oder einer verrastbaren Profilierung versehen sein. Ferner besteht die Möglichkeit, die Fuge zwischen den Isolierwandrändern mit Bezug auf einen Querschnitt durch die Isolierschale radial oder auch im spitzen Winkel zur Radialrichtung zu orientierten oder auch beispielsweise nut- und federartig zu verzahnen, soweit dies zu Zustand der Isolierschale nach Anlegen an das zu isolierende Rohr betrifft.

Die genannte Fuge kann auch mit Bezug auf einen Radialquerschnitt treppenartig oder entsprechend einer S-Kurve gekrümmt verlaufen. Die soeben beschriebenen Gestaltungsformen der Fuge bewirken, daß sich Wärmebrücken oder Kältebrücken im Bereich der Fuge zwischen den einander gegenüberstehenden Isolierwandrändern zuverlässig vermeiden lassen.

Schließlich kann die im montierten Zustand die jeweils andere Befestigungsleiste überlappende Befestigungsleiste mit einer Aufreißfahne versehen sein, die sich nahe der Solltrennstelle befindet, so daß durch Verformen des zunächst einstückigen Befestigungsleistenbandes die Solltrennstelle aufgerissen oder aufgebrochen wird.

Vorteilhafte Ausgestaltungen und Weiterbildungen sind im übrigen Gegenstand der anliegenden, dem Anspruch 1 nachgeordneten Ansprüche, deren Inhalt hierdurch ausrücklich zum Bestandteil der Beschreibung gemacht wird, ohne an dieser Stelle den Wortlaut zu wiederholen.

Einige Ausführungsbeispiele werden nachfolgend unter Bezugnahme auf die Zeichnung erläutert. Es stellen dar :

Fig. 1 einen Radial-Querschnitt durch eine rohrförmige Isolierschale der hier beschriebenen Art im Anlieferungszustand vor der Montage,

Fig. 2 einen Radial-Querschnitt der rohrförmigen Isolierschale nach Figur 1 nach Anlegen an ein zu isolierendes Rohr,

Fig. 3 eine Teilansicht eines Radial-Querschnittes einer rohrförmigen Isolierschale gemäß einer anderen Ausführungsform mit aneinander verrastbaren Befestigungsleisten, wobei sich die Isolierschale im Anlieferungszustand vor der Montage befindet,

Fig. 4 einen Radial-Querschnitt der Isolierschale nach Figur 3 nach Montage an einem zu isolierenden Leitungsrohr,

Fig. 5 eine vergrößerte ausschnittsweise Schnittdarstellung der rohrförmigen Isolierschale und der an den Isolierwandrändern angebrachten Befestigungsleisten im Anlieferungszustand vor Auftrennen der Solltrennstelle,

Fig. 6 eine Figur 5 entsprechende Darstellung der Isolierschale in dem in Figur 4 wiedergegebenen Zustand,

Fig. 7 eine Teil-Querschnittsdarstellung einer Isolierschale im Anlieferungszustand vor Auftrennen der Solltrennstelle sowie mit Befestigungsleisten der Isolierwandränder gemäß einer anderen Ausgestaltung,

Fig. 8 eine Teil-Querschnittsdarstellung der Ausführungsform nach Figur 7 im montierten Zustand,

Fig. 9 eine Teil-Querschnittsdarstellung einer Isolierschale in einer wiederum anderen Ausführungsform sowie im Anlieferungszustand,

Fig. 10 eine Teil-Querschnittsdarstellung der Isolierschale gemäß Figur 9 im montierten Zustand,

Fig. 11 eine perspektivische Darstellung der Isolierschale gemäß Figur 7 in dem in Figur 7 gezeigten Zustand sowie in verkleinertem Maßstab und

Fig. 12 eine Teil-Querschnittsdarstellung einer nochmals anderen Ausführungsform einer Isolierschale im Anlieferungszustand.

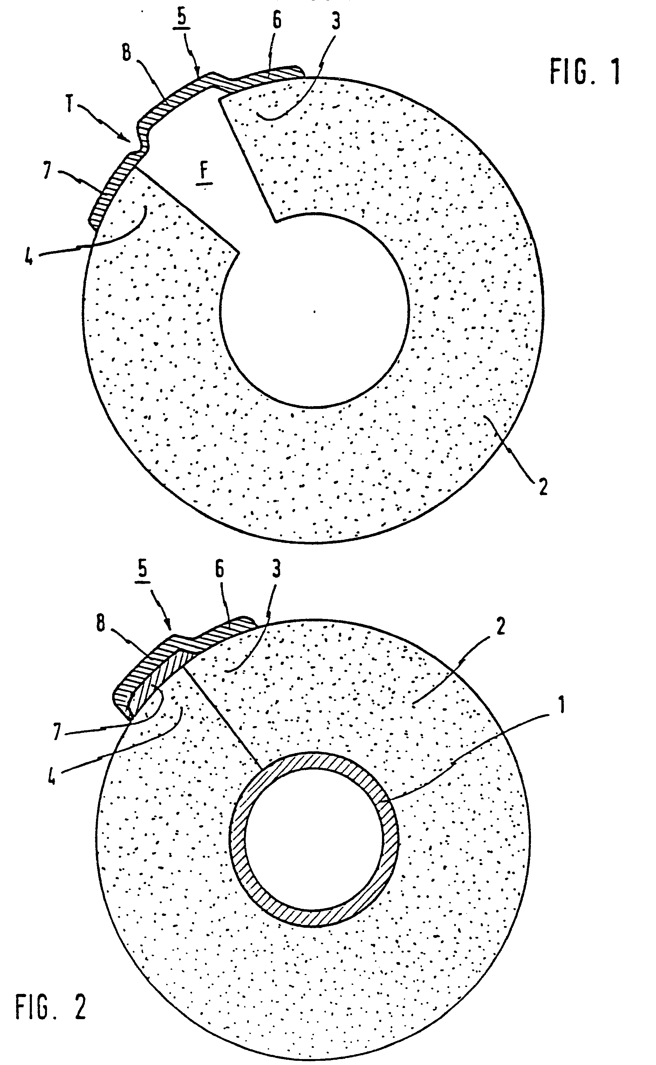

Zur Wärme- oder Kälteisolierung eines in Figur 2 mit 1 bezeichneten Leitungsrohres dient eine aus Schaumkunststoff gefertigte rohrförmige Isolierschale 2, welche, was in den Zeichnungen nicht im einzelnen gezeigt ist, mit einer widerstandsfähigen Kunststoff-Außenhaut versehen sein kann, welche das Eindringen von Feuchtigkeit sowie die Beschädigung durch mechanische Einwirkung verhindert.

Die Isolierwand der rohrförmigen Isolierschale 2 hat im Querschnitt etwa ringförmige Gestalt, wobei die Isolierwandränder 3 und 4 im Anlieferungszustand vor Montage bestimmten Abstand voneinander haben, so daß zwischen den Isolierwandrändern eine Fuge F gebildet ist. Diese Fuge hat bei der in den Figuren 1 und 2 gezeigten Ausführungsform mit Bezug auf den gezeigten Radial-Querschnitt etwa radialen Verlauf und kann dadurch erzeugt werden, daß entweder der zur Bildung der Isolierwand vorbereitete Schaumstoffstreifen nur teilweise zu einem Rohr gebogen wird, so daß die längslaufende Radialfuge F offen bleibt oder indem ein zunächst geschlossenes, beispielsweise durch Strangpressen erzeugtes Schaumstoffrohr längs des Bereiches der Fuge F aufgetrennt und dann etwa durch einen Dorn soweit aufgebogen wird, daß sich die gewünschte Breite der Fuge F ergibt.

Über die radial äußere Fugenöffnung hinweg ist auf der Aussenseite der rohrförmigen Isolierschale 2 ein einstückiger Kunststoffprofilstreifen 5, der aus einem thermoplastischen Kunststoff durch Strangpressen erzeugt sein kann, durch Aufkleben oder durch thermisches Verschweißen befestigt, so daß eine Lasche 6 am Isolierwandrand 3 und eine Lasche 7 am Isolierwandrand 4 befestigt ist. Ein Abschnitt 8, welcher als Überlappungsteil bezeichnet wird, überspannt die äußere Öffnung der Fuge F.

Der zunächst einstückige Kunststoffprofilstreifen 5 ist im Bereich der Fugenöffnung mit einer längslaufenden Solltrennstelle T versehen, welche, wie in Figur 1 gezeigt ist, vorzugsweise nahe einem der Isolierwandränder, vorliegend nahe dem Isolierwandrand 4 angeordnet ist.

Zur Montage wird die Isolierschale in dem in Figur 1 verdeutlichten Zustand angeliefert und dann die Solltrennstelle T beispielsweise mittels eines Schneidmessers oder bei ausreichender Sprödigkeit des Werkstoffes des Kunststoff-Profilbandes 5 durch dessen Verformung geöffnet und die Isolierwand wird unter weiterer Vergrößerung der Fuge F so weit aufgebogen, daß die

rohrförmige Isolierschale 2 um das zu isolierende Rohr 1 herumgelegt bzw. von der Seite auf das Rohr 1 aufgeschoben werden kann. Hiernach wird die Isolierwand vollständig zum Erreichen der Ringform ihres Querschnittes zusammengebogen, bis die Isolierwandränder 3 und 4 aneinanderstoßen und sich unter Schließung der Fuge F der in Figur 2 wiedergegebene Zustand ergibt.

Die Mittel zum Zusammenhalten der Isolierwandränder 3 und 4 haben nun die Gestalt von jeweils an diesen Isolierwandrändern befestigten, längslaufenden Befestigungsleisten, von denen eine von der Lasche 7 gebildet ist, während die andere durch die Lasche 6 und das daran einstückig anschließende Überlappungsteil 8 gebildet ist. Das Überlappungsteil 8 überlappt in der in Figur 2 gezeigten Stellung die Lasche 7, da seine Breite im wesentlichen der Breite der radial äußeren Fugenöffnung entspricht, wobei während der Montage nicht auf ein präzises Bewegen der beiden Befestigungsleisten relativ zueinander geachtet werden muß, da sich die präzise Überlappungsstellung gemäß Figur 2 zwangsläufig dann ergibt, wenn die Fuge F beim Herumlegen der Isolierwand um das zu isolierende Leitungsrohr geschlossen wird.

Eine dauerhafte Verbindung zwischen den einander zugekehrten Flächen des Überlappungsteiles 8 und der Lasche 7 kann durch eine Verklebung, durch thermische Verschweißung, durch zunächst mittels Deckfolien abgedeckte Klebebeläge, durch Klettstreifen oder durch eine verrastbare Profilierung erreicht werden, worauf weiter unten noch näher eingegangen wird.

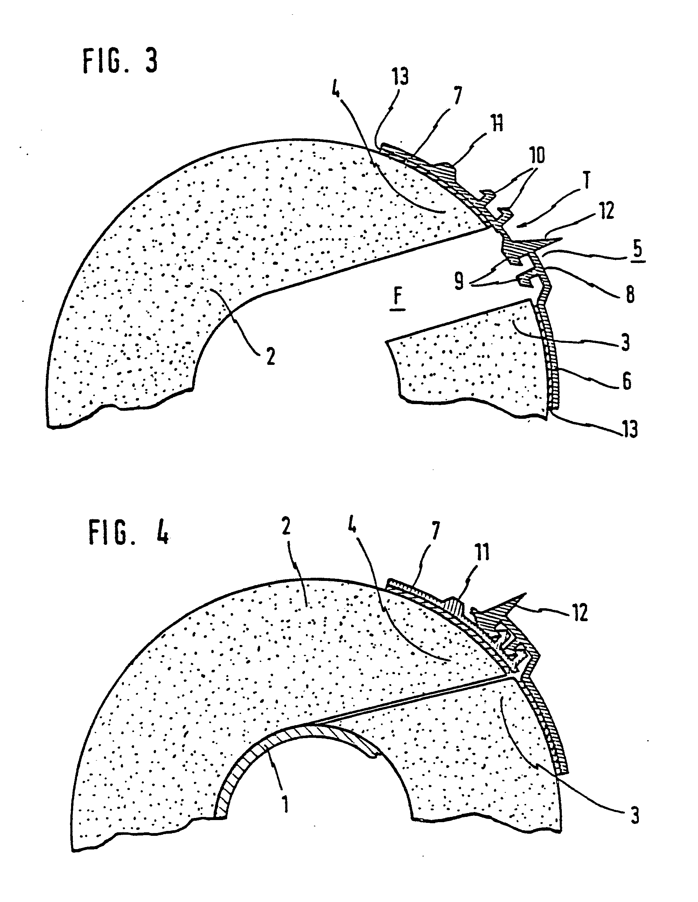

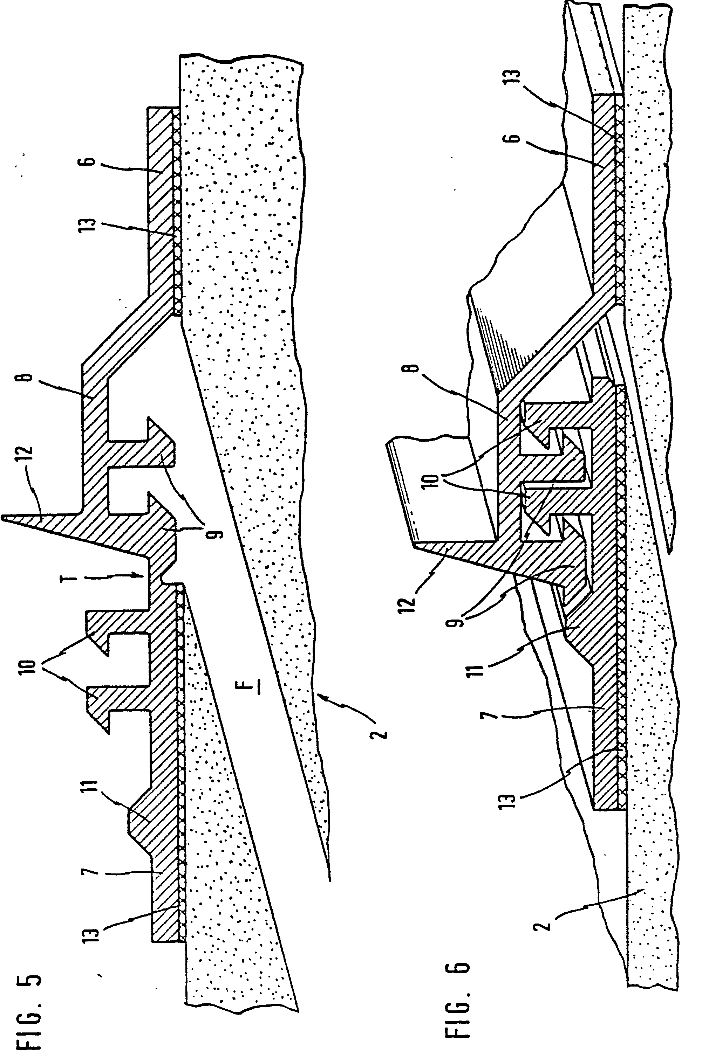

Eine verrastbare Profilierung der im montierten Zustand der rohrförmigen Isolierschale einander zugekehrten Seiten der beiden Befestigungsleisten des Kunststoffprofilstreifens ist bei der Ausführungsform nach den Figuren 3 bis 6 gezeigt. Das Überlappungsteil 8 ist mit längslaufenden, nach innen weisenden, im Querschnitt hakenförmigen Profilansätzen 9 versehen und die Lasche 7 trägt entsprechende, nach außen weisende, längslaufende Hakenprofilansätze 10 sowie eine Führungsrippe 11. Die Solltrennstelle T des Kunststoffprofilstreifens 5 befindet sich zwischen der Rückseite des Profilkopfes des dem freien Ende des Überlappungsteiles 8 nächstgelegenen Hakenprofilansatzes 9 und dem Fuß des der Fuge F nächstliegenden Hakenprofilansatzes 10. Wird die Solltrennstelle T durch Verbiegen oder Verformen oder auch durch Ziehen an einer Profilfahne 12 des Kunststoffprofilstreifens 5 geöffnet, so kann in entsprechender Weise, wie für die Ausführungsform nach den Figuren 1 und 2 beschrieben, die rohrförmige Isolierschale unter weiterer Öffnung der Fuge F von der Seite auf ein zu isolierendes Leitungsrohr 1 aufgeschoben werden und dann die Fuge F geschlossen werden, so daß sich der in den Figuren 4 und 6 gezeigte Montagezustand einstellt, in welchem die Hakenprofilansätze 9 und 10 des Überlappungsteiles 8 bzw. der Lasche 7 ineinander verrastet sind. Die Führungsrippe 11 erleichtert dabei das Erreichen der zur Verrastung notwendigen Stellung, falls eine größere Toleranz der gegenseitigen Lage der Isolierwandränder 3 und 4 aufgrund des gezeigten schrägen Verlaufes der Fuge F oder aufgrund einer größeren Nachgiebigkeit des Schaumstoffes zu erwarten ist.

Im übrigen hat der schräge Verlauf der Fuge F den Vorteil, daß Kälte- oder Wärmebrücken durch Konvektion, Strahlung oder thermische Leitung im Bereich der Stoßstelle zwischen den Isolierwandrändern 3 und 4 weitgehend vermieden werden.

Ebenso wie bei der zuvor beschriebenen Ausführungsform können die Laschen 6 und 7 des Kunststoff-Befestigungsstreifens 5 durch Klebung, thermische Verschweißung, jedoch auch durch Kontaktklebebeläge und in bestimmten Fällen auch durch Klettstreifen an der Außenseite der rohrförmigen Isolierschale im Bereich der Isolierwandränder 3 bzw. 4 befestigt sein. In den Figuren 3 bis 6 ist eine Verklebung der Laschen 6 und 7 bei 13 jeweils in übertriebener Schichtstärke angedeutet.

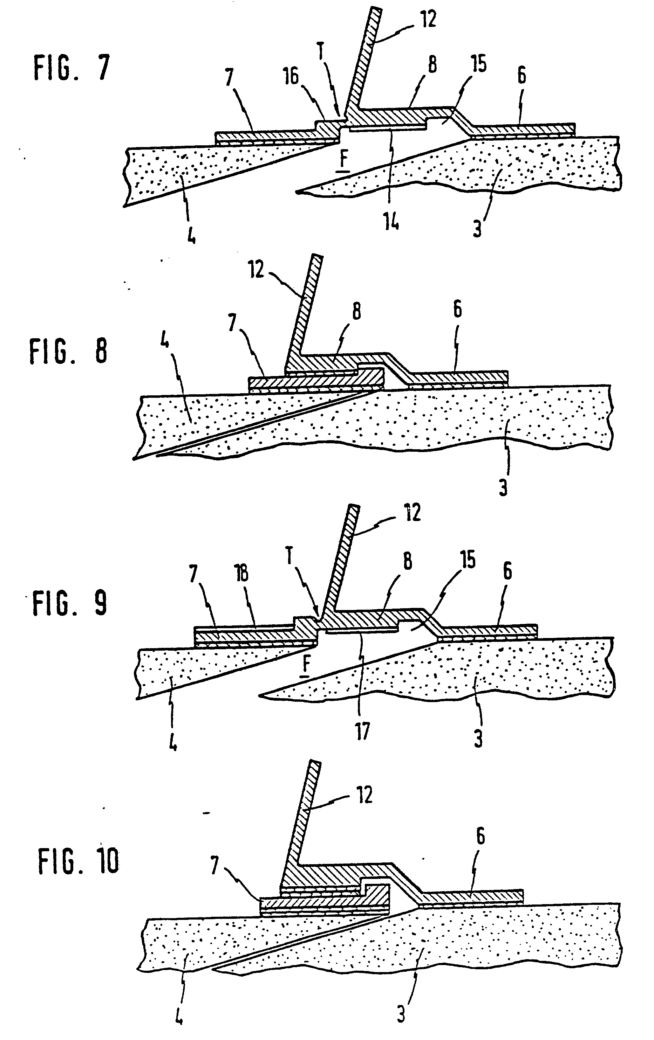

Bei der in Figur 7 und Figur 8 gezeigten Ausführungsform ist die nach innen weisende Seite des Überlappungsteiles 8 mit einem vorspringenden Flächenbereich versehen, auf dem sich ein streifenförmiger Klebebelag 14 befindet und neben welchem der Lasche 6 benachbart ein zurückversetzter Flächenbereich 15 verläuft.

Die Lasche 7 ist der Solltrennstelle T benachbart mit einem im Querschnitt etwa rechteckigen Profilsteg 16 ausgestattet. Wird die Solltrennstelle T durch Verbiegen der Fahne 12 oder durch Ziehen an dieser Fahne geöffnet, so kann ähnlich wie bei den zuvor beschriebenen Ausführungsformen der in Figur 8 im Querschnitt ausschnittsweise gezeigte Montagezustand erreicht werden, wobei der Profilsteg 16 in den zurückgesetzten Profilbereich 15 des Überlappungsteiles 8 eingreift, sobald der Klebebelag 14 auf die nach außen weisende, neben dem Profilsteg 16 gelegene Fläche der Lasche 7 aufgedrückt ist. Das Ineinandergreifen der Teile 15 und 16 bewirkt eine zusätzliche Sicherheit der Verbindung durch die Befestigungsleisten, so daß die Isolierwandränder 3 und 4 auch dann nicht das Bestreben haben, auseinanderzuwandern, wenn der Klebebelag 14 unter der Einwirkung kurzzeitiger extremer Temperaturen zum Fließen neigt.

Die Ausführungsform nach den Figuren 9 und 10 ist im wesentlichen genauso ausgebildet wie diejenige, welche in den Figuren 7 und 8 gezeigt ist, jedoch mit der Ausnahme, daß hier an dem Überlappungsteil 8 im Bereich des vorspringenden Flächenteiles der Innenseite ein Klettstreifen 17 angebracht, beispielsweise festgeklebt ist, während auf der Außenseite der Lasche 7 ein entsprechender Klettstreifen 18 angebracht, beispielsweise aufgeklebt ist. Die Klettstreifen 17 und 18 liegen in dem in Figur 10 gezeigten Montagezustand aufeinander.

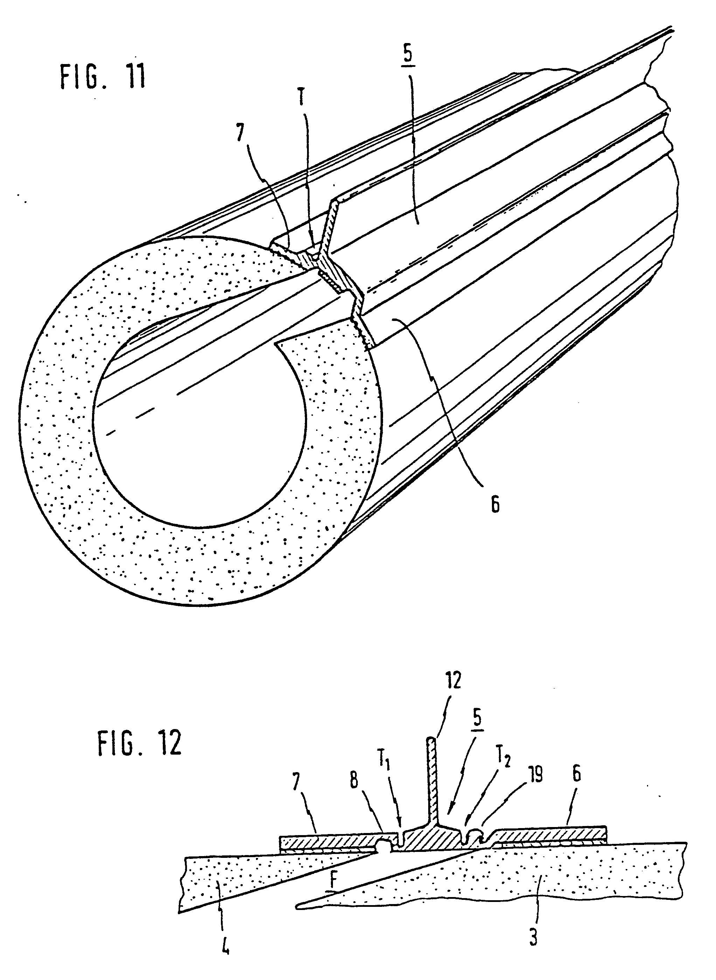

Figur 11 zeigt die allgemeine Anordnung der Bauteile der rohrförmigen Isolierschale etwa nach den Figuren 7 und 8 im Anlieferungszustand, wobei erkennbar ist, daß das Auftrennen der Solltrennstelle T beim Verbiegen der Fahne 12 dadurch begünstigt wird, daß die Lasche 7 an dem sich im Querschnitt verjüngenden Isolierwandrand 4 festgeklebt oder festgeschweißt und folglich eine Knickung des Kunststoffprofilstreifens 5 um die längslaufende Solltrennstelle T bis zu ihrem Aufbrechen erleichtert wird.

Die Ausführungsform nach Figur 12 schließlich besitzt zwei zueinander parallel längslaufende Solltrennstellen $T_1$ und $T_2$ des Kunststoff-Profilstreifens 5, so daß aus diesem durch Ziehen an der Fahne 12 ein Mittelstück entnehmbar ist und an den Isolierwandrändern 3 und 4 im wesentlichen nur die Laschen 6 bzw. 7 verbleiben, an deren der Mündung der Fuge F zugewandten Rändern vergleichsweise kurze Verrastungsprofile vorgesehen sind. Bei der Ausführungsform nach Figur 12 hat somit das Überlappungsteil 8 die Gestalt eines kurzen, an die Lasche 7 angesetzten Profilbogens, der über einer an dem freien Rand der Lasche 6 vorgesehenen, längslaufenden Profilrippe 19 einrastbar ist.

Abschließend sei noch auf den Vorteil der hier vorgeschlagenen rohrförmigen Isolierschale hingewiesen, daß ihre Mittel zum Zusammenhalten der Isolierwandränder aufgrund ihrer Gestaltung bereits den Hinweis auf die für die Montage notwendigen Handgriffe geben, so daß Fehlbetätigungen, welche zur Zerstörung führen können, ausgeschlossen werden. Außerdem ist zu erwähnen, daß Kunststoff-Profilstreifen 5 verhältnismäßig geringer Profilhöhe ausreichend flexibel sind, um in Rollenform angeliefert zu werden, so daß dann, wenn auch die Isolierschale kontinuierlich gefertigt wird, eine kontinuierliche Fertigung beliebiger Längenstücke von rohrförmigen Isolierschalen vorgesehen werden kann, wobei bestimmte Isolierrohrabschnitte dann von Isolierrohren großer Länge unter gleichzeitiger Durchtrennung des Kunststoff-Profilstreifens 5 abgetrennt werden.

## Patentansprüche

1. Rohrförmige Isolierschale (2) zur thermischen Isolation an Rohrleitungen (1) von Wärmeoder Kälteanlagen mit einer aus Schaumstoff gefertigten, im Querschnitt im wesentlichen ringförmigen Isolierwand, welche von einer längslaufenden, sich im wesentlichen von der Außenfläche der Isolierschale zu deren Innenraum erstreckenden Fuge (F) durchsetzt ist, sowie mit Mitteln (5) zum Zusammenhalten der einander gegenüberliegenden Isolierwandränder (3, 4) längs der genannten Fuge in Gestalt von an den einander gegenüberliegenden Isolierwandrändern jeweils befestigten, miteinander verbindbaren Befestigungsleisten (6, 8 ; 7), dadurch gekennzeichnet, daß diese Befestigungsleisten einstückig über mindestens eine längslaufende Solltrennstelle (T) verbunden im wesentlichen nebeneinanderliegend und die Fuge (F) überspannend an den Isolierwandrändern (3, 4) so befestigt sind, daß die Solltrennstelle im Bereich der radial äußeren Fugenöffnung gelegen ist und daß die Fuge solche Breite in Umfangsrichtung hat, daß nach Durchtrennen der Solltrennstelle unter Schliessen der Fuge ein freies Ende (8) einer Befestigungsleiste die jeweils andere Befestigungsleiste (7) mindestens teilweise überlappend in Befestigungseingriff mit der anderen Befestigungsleiste bringbar ist.

2. Isolierschale nach Anspruch 1, dadurch gekennzeichnet, daß Laschen (6, 7) der Befestigungsleisten (6, 8 ; 7) mit der Außenseite der Isolierwand durch Klebung (13) und/oder Verschweißung und/oder Mittels Kontaktklebebelägen verbunden sind.

3. Isolierschale nach Anspruch 1 oder 2, dadurch gekennzeichnet, daß an die die jeweils andere Befestigungsleiste (7) überlappende Befestigungsleiste (6, 8) eine Aufreißfahne (12) angeformt ist.

4. Isolierschale nach einem der Ansprüche 1 bis 3, dadurch gekennzeichnet, daß die in der Überlappungsstellung einander zugekehrten Seiten der Befestigungsleisten (6, 8, 7) mittels einer Klebung und/oder mittels eines an mindestens einer der Befestigungsleisten angebrachten Klebebelages (14) und/oder mittels an den beiden Befestigungsleisten angebrachter Klettbeläge (17, 18) und/oder mittels ineinandergreifender Profilierungen (15, 16) an den beiden Befestigungsleisten und/oder mittels ineinander verrastbarer Profilansätze (9, 10 bzw. 8, 19) aneinander befestigbar sind.

5. Isolierschale nach einem der Ansprüche 1 bis 4, dadurch gekennzeichnet, daß die Fuge (F) mindestens abschnittsweise im spitzen Winkel zu einer Radialrichtung vom Innenraum zur Außenseite der Isolierschale orientiert ist.

6. Isolierschale nach einem der Ansprüche 1 bis 4, dadurch gekennzeichnet, daß die Fuge in einem Radialquerschnitt treppenartig oder entsprechend einer S-Kurve gekrümmt verläuft.

## Claims

1. A tubular insulating shell (2) for the thermal insulation of pipelines (1) of heat or refrigerating systems, comprising an insulating wall, which is made of foam end substantially annular in cross-section and through which a longitudinal gap (F) extends substantially from the outside surface of the insulating shell to the interior thereof, and means (5) for holding the mutually opposite edges (3, 4) of the insulating wall together along said gap and consisting of fixing bars (6, 8 ; 7), which are secured to the mutually opposite edges of the insulating wall and are adapted to be joined, characterized in that said fixing bars are integrally joined by means of at least one longitudinally extending rated breaking portion (T) and are substantially juxtaposed and bridge the gap (F) and are secured to the edges (3, 4) of the insulating wall in such a manner that the rated breaking portion is disposed adjacent to the radially outer opening of the gap, and the gap has such a width in the peripheral direction that after a fracture of the rated braking point and a closing of the gap a free end of a fixing bar is movable to a fixing engagement with the other fixing bar (7) so as to overlap the other fixing bar at least in part.

2. An insulating shell according to claim 1, characterized in that straps (6, 7) of the fixing bars (6, 8 ; 7) are joined to the outside of the insulating wall by adhesion (13) and/or welding and/or by means of Velcro coverings and/or by means of contact adhesive coatings.

3. An insulating shell according to claim 1 or 2, characterized in that that fixing bar (6, 8) which overlaps the other fixing bar (7) is formed with a tear tab (12).

4. An insulating shell according to any of claims 1 to 3, characterized in that those sides of the fixing bars (6, 8, 7) which face each other in the overlap position are adapted to be fixed to the two fixing bars by adhesion and/or by means of an adhesive coating (14) that is provided on at least one of the fixing bars and/or by means of Velcro coverings (17, 18) which are attached to the two fixing bars and/or by means of interengaging profiled portions (15, 16) and/or are adapted to be secured to each other by means of profiled extensions (9, 10 or 8, 19) which are adapted to snap into each other.

5. An insulating shell according to any of claims 1 to 4, characterized in that the gap (F) is oriented at least in sections at an acute angle to a radial direction from the interior to the outside of the insulating shell.

6. An insulating shell according to any of claims 1 to 4, characterized in that the gap is stepped or is curved like an S curve in a radial cross-section.

## Revendications

1. Coque isolante tubulaire (2) pour l'isolation thermique à la tuyauterie des installations de chauffage ou frigorifiques, qui comprend, d'une part, une paroi isolante en matière alvéolaire, dont la section transversale est essentiellement annulaire et par laquelle passe un joint (F) longitudinal qui s'étend essentiellement d'une face extérieure de ladite coque isolante vers l'intérieur, et, d'autre part, des moyens (5) pour lier les bords (3, 4) opposés de la paroi isolante le long dudit joint, sous forme des rebords de raccord (6, 8 ; 7) dont chacun est attaché aux bords opposés de la paroi isolante et qui sont reliables, l'un à l'autre, caractérisée en ce que lesdits rebords de raccords sont intégraux le long d'au moins un endroit longitudinal (T) destiné au sectionnement, en étant essentiellement en juxtaposition et recouvrants ledit joint (F), et sont attachés aux bords (3, 4) de la paroi isolante d'une manière que l'endroit destiné au sectionnement soit situé dans la zone de l'ouverture du joint radialement extérieure, et en ce que, dans la direction circonférentielle, ledit joint est d'une largeur telle qu'après le sectionnement dudit endroit destiné à cette fin, en fermant ledit joint, une extrémité libre (8) d'un desdits rebords de raccord se peut porter en prise de raccord avec l'autre desdits rebords de raccord, en recouvrant, au moins partiellement, ledit autre rebord de raccord (7).

2. Coque isolante selon la Revendication 1, caractérisée en ce que des languettes de fixation (6, 7) desdits rebords de raccord (6, 8 ; 7) sont attachées à la face extérieure de ladite paroi isolante par collage (13) et/ou soudage et/ou au moyen des garnitures de fermeture du type cramponnante et/ou au moyen des garnitures de colle de contact.

3. Coque isolante selon la Revendication 1 ou 2, caractérisée en ce que un talon de déchirage (12) est intégralement formé au rebord de raccord (6, 8) recouvrant l'autre rebord de raccord (7).

4. Coque isolante selon quelconque des Revendications 1 à 3, caractérisée en ce que les côtés desdits rebords de raccord (6, 8, 7) tournés l'un à l'autre à l'endroit de recouvrement, se peuvent fixer l'un à l'autre à l'endroit de recouvrement, se peuvent fixer l'un à l'autre par un collage et/ou au moyen d'une garniture de colle (14) pourvue au moins à un desdits rebords de raccord, et/ou au moyen des garnitures de fermeture du type cramponnante (17, 18) fixées auxdits deux rebords de raccord, et/ou au moyen des profilages (15, 16) aux deux rebords de raccord, et/ou au moyen des talons profilés (9, 10 ou 8, 19) qu'on peut enclencher l'un dans l'autre.

5. Coque isolante selon quelconque des Revendications 1 à 4, caractérisée en ce que ledit joint (F) est orienté, au moins par segments, à un angle aigu relatif à un rayon radial passant de l'intérieur vers la face extérieure de la coque isolante.

6. Coque isolante selon quelconque des Revendications 1 à 4, caractérisée en ce que ledit joint s'étend, dans une section radiale, en escalier ou est courbé à l'allure une courbe en S.

0 175 943

FIG. 1

FIG. 2

FIG. 3

FIG. 4

FIG. 5

FIG. 6

FIG. 7

FIG. 8

FIG. 9

FIG. 10

FIG. 11

5

T

7

6

FIG. 12

12

5

$T_1$

8

$T_2$

19

6

7

F

4

3